# EUROPÄISCHE PATENTSCHRIFT

(11) **EP 2 342 115 B1**
(45) Veröffentlichungstag und Bekanntmachung des Hinweises auf die Patenterteilung: **06.01.2016**
(21) Anmeldenummer: 08801308.1
(22) Anmeldetag: 09.09.2008
(51) Int. Cl.: G07F 7/06, B62B 3/14

(54) **SCHIEBEGRIFF MIT LUPE FÜR EINEN EINKAUFSWAGEN**
PUSHING HANDLE WITH MAGNIFYING GLASS FOR A SHOPPING CART
POIGNÉE MUNIE D'UNE LOUPE POUR CHARIOT DE SUPERMARCHÉ

(30) Priorität: 13.09.2007 DE 202007012822 U
(43) Veröffentlichungstag der Anmeldung: 13.07.2011
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2008/001504
(87) Internationale Veröffentlichungsnummer: WO 2009/033464

(56) Entgegenhaltungen:
- DE-C- 718 864
- DE-U1-202004 017 170
- DE-U1-202005 006 627
- JP-A- 2003 154 940

## Beschreibung

### Technisches Gebiet

Die Erfindung betrifft einen Schiebegriff für Einkaufswagen, der eine Lupe aufweist, mit deren Hilfe der Kunde eines Supermarktes Angaben auf der Verpackung einer Ware leichter lesen kann.

### Stand der Technik

Ein derartiger Schiebegriff ist aus der DE 202005006627 U1 bekannt. Dort ist eine Lupe offenbart, die am Handgriff fest und nicht herausnehmbar befestigt ist.

Nachteilig bei diesem bekannten Stand der Technik ist es, dass die Lupe ungeschützt Umwelteinflüssen und eventuellem Vandalismus ausgesetzt ist.

### Offenbarung der Erfindung

Es ist Aufgabe der Erfindung einen Schiebegriff mit Lupe für Einkaufswagen zu schaffen, bei welchem die Lupe gegen Umwelteinflüsse und eventuellen Vandalismus geschützt ist.

Die Überlegungen, die zum Entstehen der vorliegenden Erfindung führten gingen davon aus, dass die Lupe nur während des Gebrauchs des Einkaufswagens benötigt wird und die übrige Zeit geschützt aufbewahrt werden kann.

Weitergehende Überlegungen führten zu der Erkenntnis, dass die Benutzung der Lupe auf Pfandbasis möglich sein soll.

### Kurze Beschreibung der Zeichnungen

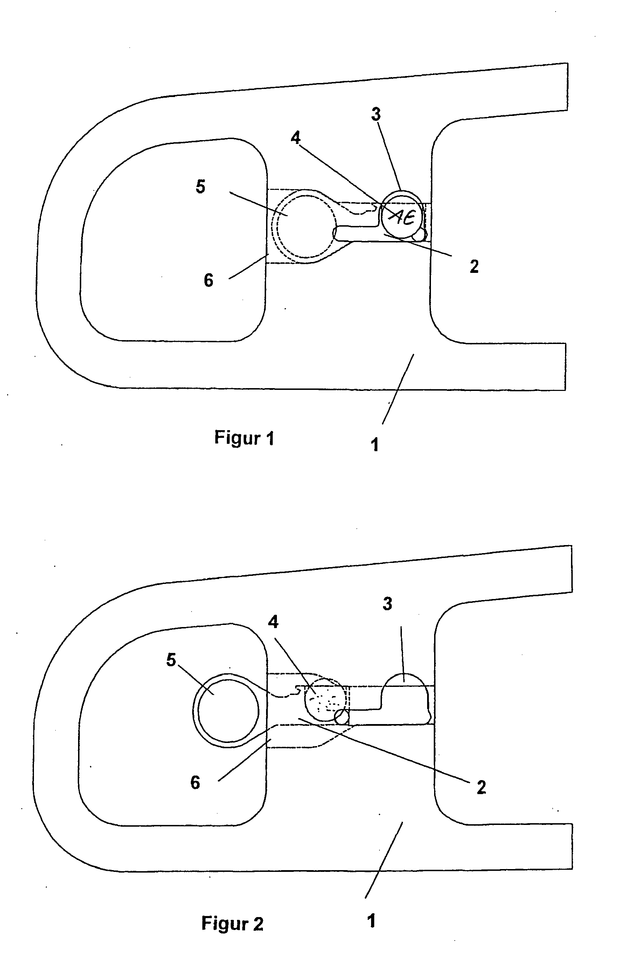

Die Figur 1 zeigt einen Teil eines Schiebegriffes 1 für einen nicht näher gezeigten Einkaufswagen.

In einem Bereich, der ein ausreichendes Volumen zur Aufnahme der nötigen Mechanik aufweist befindet sich ein Schieber 2. Der Schieber 2 hat eine Münzaufnahme 3, in welcher sich eine Münze 4 befindet.

Befindet sich in der Münzaufnahme 3 eine Münze 4, so lässt sich der Schieber 2 verschieben. Am Schieber 2 ist eine Lupe 5 befestigt.

In dieser Darstellung erkennt man dass die strichliniert dargestellte Lupe 5 völlig innerhalb einer Tasche 6 des Griffes aufbewahrt ist. Dieser Aufbewahrungsort hat in neuer und erfinderischer Weise den Vorteil eines erhöhten Schutzes gegen Umwelteinflüsse und Vandalismus.

Diese Tasche 6 schützt die transparenten und empfindlichen Bereiche der Lupe 5,

Die Figur 2 zeigt die Situation aus Figur 1 nachdem der Schieber 2 verschoben wurde.

Die Münze 4 ist zusammen mit dem Schieber 2 verschoben worden und befindet sich nun innerhalb des Griffes 1.

Durch dieses Verschieben ist die Lupe 5 aus dem Griff 1 heraus geschoben worden und der Benutzer kann nun mit Hilfe der Lupe 5 Angaben auf der Verpackung einer Ware vergrößert betrachten. Insbesondere Aufschriften, die üblicherweise klein gedruckt sind, aber dennoch den Käufer interessieren, etwa das Haltbarkeitsdatum oder die Inhaltsangabe der Zusatzstoffe sind nun besser lesbar.

Wenn die Lupe 5 nicht mehr benötigt wir, so wird die Lupe 5 wieder zurück in den Griff 1 geschoben, mit der Folge, dass die Münze 4 aus der Münzaufnahme 3 wieder entnommen werden kann.

Anstatt einer Münze kann auch ein anderes kompatibles Pfandstück verwendet werden.

Die in den Figuren gezeigte Konstruktion ist nur eine von vielen möglichen erfmderischen Lösungen des Problems.

Der grundlegende Gedanke liegt darin, die Lupe nur dann zur Verfügung zu stellen, wenn der Benutzer ein Pfand verwendet.

Die Freigabe der Lupe lässt sich daher auch kombinieren mit der Verwendung eines Münzpfandschlosses. So ist es in einer anderen Ausgestaltung der Erfindung möglich, dass die Lupe zur Verfügung gestellt wird, wenn das Münzpfandschloss entriegelt wird um den Einkaufswagen aus einer Sammelstelle zu entnehmen.

Beim Zurückbringen des Einkaufswagens in eine Sammelstation und dem bekannten Ankoppeln des Münzpfandschlosses wird die Lupe wieder in die geschützte Position innerhalb des Griffes verbracht und erst anschließend kann die Pfandmünze aus dem Münzpfandschloss entnommen werden.

Die Lupe wird hierbei entweder automatisch, etwa durch Federkraft beim Einstecken des Schlüssels in das Pfandschloss oder manuell durch den Benutzer wieder in die geschützte Position innerhalb des Griffes verbracht.

### Gewerbliche Anwendbarkeit

Die Erfindung lässt sich gewerblich an Einkaufswagen in großem Umfang verwenden.

## Patentansprüche

1. Schiebegriff für Einkaufswagen, der eine Lupe aufweist, wobei im Griff (1) ein Aufbewahrungsort (6) vorgesehen ist, an welcher die Lupe (5) vor Umwelteinflüssen geschützt ist,
**dadurch gekennzeichnet,**
**dass** eine Mechanik (2) vorgesehen ist, durch welche die Lupe (5) aus dem Aufbewahrungsort (6) heraus bewegbar ist und dass die Lupe (5) erst dann bewegbar ist, wenn ein Pfandstück (4) oder eine Pfandmünze (4) in die Mechanik (2) eingesetzt ist.

2. Schiebegriff nach Anspruch 1,
**dadurch gekennzeichnet,**
**dass** die Lupe (5) aus dem Aufbewahrungsort (6) heraus bewegbar ist, wenn ein dem Schiebegriff zugeordnetes Münzpfandschloss durch das Pfandstück (4) oder die Pfandmünze (4) betätigt wurde.

3. Schiebegriff nach Anspruch 1 oder 2,
**dadurch gekennzeichnet,**
**dass** Pfandstück (4) oder die Pfandmünze (4) erst dann dem Münzpfandschloss entnehmbar ist, nachdem die Lupe (5) wieder in dem Aufbewahrungsort (6) zurück bewegt wurde.

4. Schiebegriff nach Anspruch 3,
**dadurch gekennzeichnet,**
**dass** die Lupe (5) beim Einstecken des Schlüssels in das Münzpfandschloss automatisch wieder in dem Aufbewahrungsort (6) zurück bewegbar ist.

5. Schiebegriff nach einem der vorherigen Ansprüche,
**dadurch gekennzeichnet,**
die Aufbewahrungsort (6) eine Tasche ist, welche die transparenten und empfindlichen Bereiche der Lupe (5) schützt.

## Claims

1. A pushing handle for shopping carts, which has a magnifying glass, wherein provision is made in the handle (1) for a storage location (6), at which the magnifying glass (5) is protected against environmental influences,
**characterized in**
**that** provision is made for a mechanism (2), by means of which the magnifying glass (5) can be moved out of the storage location (6) and in that the magnifying glass (5) can only be moved when a deposit piece (4) or a deposit coin (4) is inserted into the mechanism (2).

2. The pushing handle according to claim 1,
**characterized in**
**that** the magnifying glass (5) can be moved out of the storage location (6), when a coin deposit lock, which is assigned to the pushing handle, has been actuated by means of the deposit piece (4) or the deposit coin (4).

3. The pushing handle according to claim 1 or 2,
**characterized in**
**that** the deposit piece (4) or the deposit coin (4) can be removed from the coin deposit lock only after the magnifying glass (5) has been moved back in the storage location (6) again.

4. The pushing handle according to claim 3,
**characterized in**
**that** the magnifying glass (5) can automatically be moved back in the storage location (6) when the key is inserted into the coin deposit lock.

5. The pushing handle according to one of the preceding claims, **characterized in**
**that** the storage location (6) is a bag, which protects the transparent and sensitive areas of the magnifying glass (5).

## Revendications

1. Poignée de poussée pour des chariots de supermarché, qui comporte une loupe, dans la poignée (1) étant prévu un emplacement de rangement (6) où la loupe (5) est protégée contre les influences environnementales,
**caractérisée en ce**
**qu'**il est prévu un mécanisme (2) à l'aide duquel la loupe (5) peut être déplacée hors de l'emplacement de rangement (6) et en ce que la loupe (5) ne peut être déplacée qu'une fois qu'une pièce de consigne (4) ou une monnaie de consigne (4) est insérée dans le mécanisme (2).

2. Poignée de poussée selon la revendication 1,
**caractérisée en ce**
**que** la loupe (5) peut être déplacée hors de l'emplacement de rangement (6) lorsqu'une serrure à monnaie de consigne associée à la poignée de poussée a été actionnée par la pièce de consigne (4) ou la monnaie de consigne (4).

3. Poignée de poussée selon la revendication 1 ou la revendication 2,
**caractérisée en ce**
**que** la pièce de consigne (4) ou la monnaie de consigne (4) ne peut être retirée de la serrure pour monnaie qu'une fois que la loupe (5) a été redéplacée dans l'emplacement de rangement (6).

4. Poignée de poussée selon la revendication 3,
**caractérisée en ce**
**que** lors de l'insertion de la clé dans la serrure pour monnaie, la loupe (5) est automatiquement redéplaçable dans l'emplacement de rangement (6).

5. Poignée de poussée selon l'une quelconque des revendications précédentes,
**caractérisée en ce**
**que** l'emplacement de rangement (6) est une poche, laquelle protège les régions transparentes et sensibles de la loupe (5).
